# EUROPEAN PATENT SPECIFICATION

(11) **EP 1 946 573 B1**
(45) Date of publication and mention of the grant of the patent: **26.02.2014**
(21) Application number: 06820818.0
(22) Date of filing: 26.10.2006
(51) Int. Cl.: H04W 24/00

(54) **SIGNALING CELL COMBINING CAPABILITIES**
SIGNALISIERUNG VON ZELLENKOMBINIERFÄHIGKEITEN
CAPACITES DE COMBINAISON DE CELLULES DE SIGNALISATION

(30) Priority: 07.11.2005 US 734485 P
(43) Date of publication of application: 23.07.2008
(73) Proprietor: Nokia Corporation, 02150 Espoo (FI)
(72) Inventor: NAKAMATA, Masatoshi, Kanagawa (JP); RANTA-AHO, Karri, FI-02650 Espoo (FI)
(74) Representative: Ruuskanen, Juha-Pekka
(86) International application number: PCT/IB2006/003016
(87) International publication number: WO 2007/052110

(56) References cited:
- EP-A1- 1 389 847
- EP-A1- 1 507 421
- WO-A1-00/49760
- US-A1- 2005 076 283
- US-A1- 2005 135 389
- "3rd Generation Partnership Project; Technical Specification Group Radio Access Network; UTRAN Iub interface Node B Application Part (NBAP) signalling (Release 6)", 3RD GENERATION PARTNERSHIP PROJECT (3GPP); TECHNICALSPECIFICATION (TS), XX, XX, vol. TS 25.433 V6.7.0, 1 September 2005 (2005-09-01), page 1,296, XP003011326,
- '3rd Generation Partnership Project; Technical Specification Group Radio Access Network; UTRAN Iub interface Node B Application Part (NBAP) signalling (Release 6)' 3GPP TS 25.433 V6.7.0 September 2005, XP003011326
- '3rd Generation Partnership Project; Technical Specification Group Radio Access Network; UTRAN Iur interface RNSAP signalling (Release 6)' 3GPP TS 25.423 V6.7.0 September 2005, XP003011327

## Description

### Technical Field

This invention generally relates to wireless communications and more specifically to providing (signaling) combining capability information of a Node B for a cell to radio network controllers as related to HSUPA (High Speed Uplink Packet Access).

### Background Art

An incremental redundancy (IR) combining, utilizing retransmission sequence number (RSN) based redundancy version (RV) index, and a Chase combining (with RV index of zero) have been agreed to use for an uplink enhanced dedicated channel (E-DCH) and originally a Node B would support either one of these two combinings in 3G (Third Generation) mobile wireless communications using a UTRAN (universal mobile telecommunications system (UMTS) terrestrial radio access network). These combining capabilities are normally not known to a serving radio network controller (SRNC) for a user equipment (UE), said SRNC being a controlling RNC (CRNC) supporting the Node B or the SRNC communicating with the Node B using a drifting RNC (DRNC) which supports the Node B during a soft handover (SHO). Then there are cases when a cell (i.e., a Node B supporting this cell) in an E- DCH Active Set for the UE will execute different combining and therefore, a SHO gain will be limited since the UE can use only one combining. The same is applied to a case when the SRNC will indicate which combining the Node B should execute.

Chase combining with HARQ is a scheme wherein if the data packet is not received correctly, the soft symbols are stored (e.g., instead of storing Os and Is a probability of whether the bit was 0 or 1 is stored) by the receiver and a retransmission is requested. The transmitter sends the exact same packet again, the receiver combines the soft symbols of the previous transmission attempt(s) with the new transmission before making hard decisions on the symbols (i.e., was it the bit 0 or 1) and attempting to decode the packet.

The Incremental Redundancy (IR) with HARQ is a scheme wherein if the data packet is not received correctly, the packet is stored by the receiver and a retransmission is requested. The transmitter does not send the exact same packet, but additional redundancy bits which are used by the decoder process as additional bits helping the error correction decoder to come up with the correct data packet. In practice the IR schemes are additions to the Chase scheme so that the retransmissions may contain also some bits that had been transmitted earlier. Typically the IR scheme requires more buffering memory from the receiver as the highest data rates are achieved by transmitting only information bits and very little to no redundancy bits in the initial transmission attempt and thus the subsequent retransmissions contain only additional bits to be stored.

WO00749760 discloses control signalling for systems employing link adaptation and incremental redundancy. A link adaptation/incremental redundancy message can be transmitted from a receiving entity to a transmitting entity to inform the transmitting entity of the receiving entity's incremental redundancy status or preference. Another message, which indicates whether resegmentation should be performed for retransmitted blocks can also be transmitted from a receiving entity to a transmitting entity. Both of these messages can be used by the transmitting entity to determine an appropriate modulation/coding scheme for subsequent transmissions of both original data blocks and retransmitted data blocks. The messages can be used together or independently in either link (uplink or downlink) between a base station and a mobile station in a radio communication system.

### Disclosure of the Invention

According to a first aspect of the invention, a method comprises: there is provided a method as set forth in claim 1.

Preferable features are set out in the dependent claims.

According to a second aspect of the invention, a computer program product comprises: a computer readable storage structure embodying computer program code thereon for execution by a computer processor with the computer program code, wherein the computer program code comprises instructions for performing the first aspect of the invention, indicated as being performed by any component or a combination of components of the Node B or the at least one radio network controller.

According to a third aspect of the invention, a network element, as set forth in claim 9 is provided. Preferable features are set forth in the dependent claims.

According to a fourth aspect of the invention, a wireless communication system, as set forth in claim 16 is provided.

### Brief Description of the Drawings

For a better understanding of the nature and objects of the present invention, reference is made to the following detailed description taken in conjunction with the following drawings, in which:
Figure 1 is a block diagram showing a user equipment (UE) in a communication with a UTRAN during a cell set-up and/or a soft handover (SHO) for applying various embodiments of the present invention;
Figure 2 is a block diagram illustrating signaling combining capability information of a Node B of a wireless communication system to one or more radio network controllers, according to an embodiment
Figure 3 is a flow chart demonstrating signaling combining capability information of a Node B of a wireless communication system to one or more radio network controllers, according to an embodiment of the present invention.

### Modes for Carrying Out the Invention

A new method, system, apparatus and software product are presented for providing (signaling) combining capability information of a Node B (supporting a cell to which a user equipment is set-up) to radio network controllers as related to HSUPA (High Speed Uplink Packet Access), e.g., for FDD (frequency division duplex) capabilities. The Node B can support among others, e.g., incremental redundancy (IR) combining and/or Chase combining. Furthermore, the combining capability information of the Node B can be, e.g., for combining data received on an uplink enhanced dedicated channel (E-DCH).

In general, the combining capability information can comprise one or more information elements. According to one embodiment of the present invention, this combining capability information of the node B can comprise one information element indicating whether the node B is configured to support: a) the IR combining, b) the Chase combining or c) both the IR and the Chase combining. According to another embodiment of the present invention, this combining capability information of the Node B can comprise two information elements indicating as follows: one of the two information elements indicating whether the node B is configured to support the IR combining or not, and another of said two information elements indicating whether the node B is configured to support the Chase combining or not.

According to further embodiment of the present invention, the Node B can provide the combining capability information of the Node B to a controlling radio network controller (CRNC), e.g., during a cell set-up for providing a communication with a user equipment (UE). This signalling can occur, for example, during an initial cell set-up, wherein necessary configurations for a cell are setup and other capability information (e.g. HSDPA capability) are provided from the Node B to the CRNC. The signalling from the Node B to the CRNC, according to an embodiment of the present invention, can be provided using a Node B Application Part (NBAP) message signal over an Iub interface. It is noted that the combining capability information can be typically stored in a memory of the Node B and/or in a memory of the CRNC.

According to a further embodiment of the present invention, the signaling of the combining capability information of the Node B can be further provided, or independently provided by the CRNC supporting said Node B (the combining capability information can be provided by the Node B, can be stored in the memory of the CNRC after being provided by the Node B as described above, or it can be independently provided through Operation and Maintenance (O&M)) to a further RNC supporting a further Node B, wherein said further RNC functions, e.g., as a serving RNC (SRNC). This further providing of the combining capability information from the CRNC to the SRNC can follow the initial providing from the Node B to the CRNC during, e.g., the SHO or can be an independent step. Moreover, it is noted that during said further providing of the combining capability information of the Node B, the CRNC is configured as a drift radio network controller (DRNC) for supporting the SRNC for providing a communication with the UE during the SHO of the UE from a cell supported by the further Node B to another cell supported by said Node B. The signalling from the CRNC (i.e., DRNC) to the SRNC, according to an embodiment of the present invention, can be provided using a Radio Network Subsystem Application Part (RNSAP) message signal over an Iur interface. It is further noted that the combining capability information can be further stored in a memory of the SRNC as well.

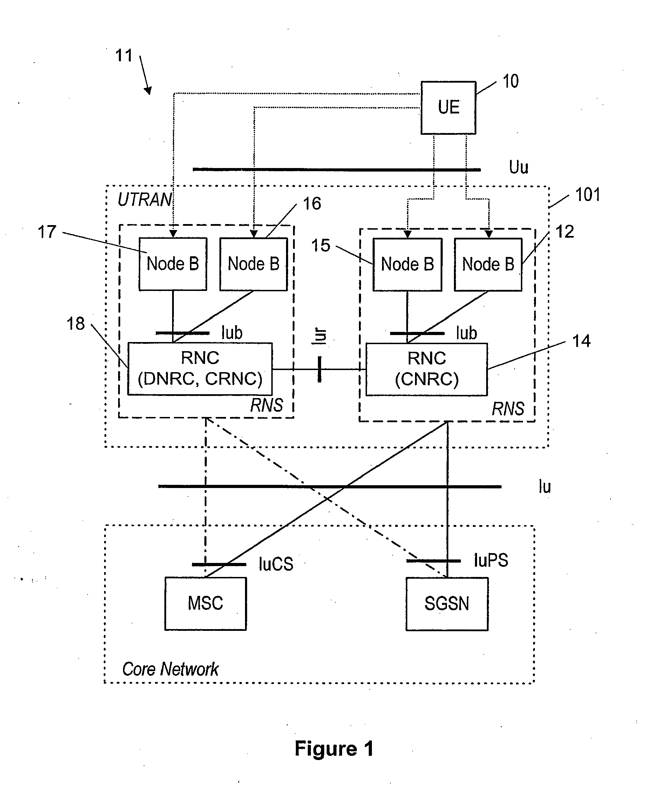

Figure 1 is an example among others of a block diagram showing a user equipment (UE) 10 in communication with an UTRAN (universal mobile telecommunications system (UMTS) terrestrial radio access network) 101 of a wireless communication system 11 during a cell setup and/or a soft handover (SHO) for applying various embodiments of the present invention.

As shown in Figure 1, according to 3G WCDMA (Third Generation Wideband Code Division Multiple Access), in communicating via wireless communication, the user equipment (UE) 10 can interface with UTRAN Node Bs (also sometimes called a base station) 12, 15, 16 and 17 over a so-called Uu interface. The UTRAN Node B12,15,16 or 17 in turn can communicate with a UTRAN radio network controller (RNC) 14 or 18, respectively, over a so-called Iub interface, and the RNC can communicate with a core network (CN) entity, either a mobile switching center (MSC) or a serving GPRS (general packet radio system) support node (SGSN), over a so-called Iu interface, and also can communicate with other RNCs over a so-called Iur interface. The Iu interface is more specifically either an Iu circuit-switched interface IuCS between a UTRAN RNC and an MSC, or an Iu packet-switched interface IuPS between a UTRAN RNC and an SGSN. The user equipment **10** can be a wireless device, a portable device, a mobile communication device, a mobile phone, etc.

The user equipment **10** can undergo the SHO from a cell supported by the Node B **12** to another cell supported by the Node B **15,** wherein both Node Bs **12** and **15** are supported by the RNC (or controlling NRC) **14.** Alternatively, the user equipment **10** can undergo SHO from a cell supported by the Node B **12** to another cell supported by the Node B **16** or **17** which is supported by another RNC (or controlling NRC) **18.** Both situations are considered by various embodiments of the present invention described herein.

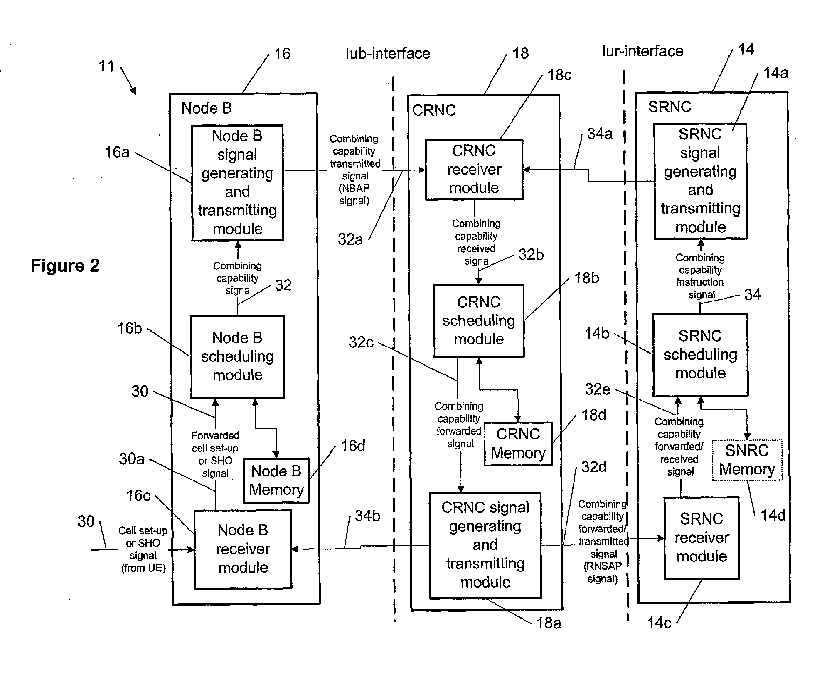

Figure 2 shows a detailed example among others of a block diagram illustrating signaling combining capability information of the Node B **16** of a wireless communication system **11** to one or more radio network controllers **18** and **14,** according to an embodiment of the present invention.

In the example of Figure 1, the Node B **16** comprises a Node B uplink signal generating and transmitting module **16a,** a Node B scheduling module **16b,** a Node B receiver module **16c** and a Node B memory **16d.** The RNC (or CRNC) **18** comprises a CRNC uplink signal generating and transmitting module **16a,** a CRNC scheduling module **18b,** a CRNC receiver module **18c** and a CRNC memory **18d.** Finally, as shown, the RNC (or SRNC) **14** comprises an SRNC uplink signal generating and transmitting module **14a,** an SRNC scheduling module **14b,** an SRNC receiver module **14c** and a SRNC memory **14d.**

Upon receiving a cell set-up **30** by the Node B receiver module **16c** which is forwarded as a signal **30,** the Node B scheduling module **16b** generates, according to embodiments described herein, a combining capability signal **32** comprising Node B **16** combining capability information retrieved, e.g., from the Node B memory **16d.** The signal **32** is re-transmitted as a signal **32a** (e.g., an NBAP signal) by the module **16a** to the CRNC receiver module **18c** of the CRNC **18,** wherein the signal **32a** being provided as a signal **32b** to the CRNC scheduling module **18b** and to the CRNC memory **18d.** This is a first step of providing the combining capability information of the Node B to the controlling RNC. If the CRNC **18** is also the SRNC for the user equipment linked to the Node B **16** during the SHO (e.g., from the Node B **17** to the Node B **16),** then no further signaling regarding Node B combining capabilities is required and the CRNC scheduling module **18b** can generate a combining capability instruction (not shown in Figure 2) for the Node B **16** defining the combining capability to be used based on the received information regarding combining capabilities of the Node B **16,** e.g., for combining the data received on an uplink enhanced dedicated channel (E-DCH).

However, if the CRNC **18** is not the SNRC for the user equipment radio linked to the Node B **16** during, e.g., the SHO from the Node B **15** to the Node B **16** (see Figure 1), then the CRNC scheduling module **18b** can generate, according to embodiments described herein, a combining capability forwarding signal **32c** comprising the Node B **16** combining capability information, e.g., retrieved from the CRNC memory **18d** (as mentioned above, the signal **32c** can be independent from the signaling from the Node B **16** or it can follow that signaling). The signal **32c** is re-transmitted as a signal **32d** (e.g., an RNSAP signal) by the module **18a** to the SRNC receiver module **14c** of the SRNC **14,** wherein the signal **32d** being provided as a signal **32e** to the SRNC scheduling module **14b** and optionally to the SRNC memory **14d.** This is a second step of providing the combining capability information of the Node B to the serving RNC which can be performed independently or in conjunction with the first step using various embodiments of the present invention described herein. Then the SRNC scheduling module **14b** can generate a combining capability instruction for the Node B **16** defining the combining capability to be used for communicating with the UE based in the received information regarding combining capabilities of the Node B **16** (see signals **34, 34a** and **34b),** e.g., for combining data received on an uplink enhanced dedicated channel (E-DCH).

According to embodiments of the present invention, the module **16b, 18b** or **14b** can be implemented as software, hardware block or a combination thereof. Furthermore, each of the blocks **16b, 18b** or **14b** can be implemented as a separate block or can be combined with any other standard block of the corresponding network element **16, 18** or **14,** or it can be split into several blocks according to their functionality. The same is applied to modules **16a, 16c, 16d, 18a, 18c, 18d, 14a, 14c** and **14d.** All or selected modules of the network element **16, 18** or **14** can be implemented using an integrated circuit.

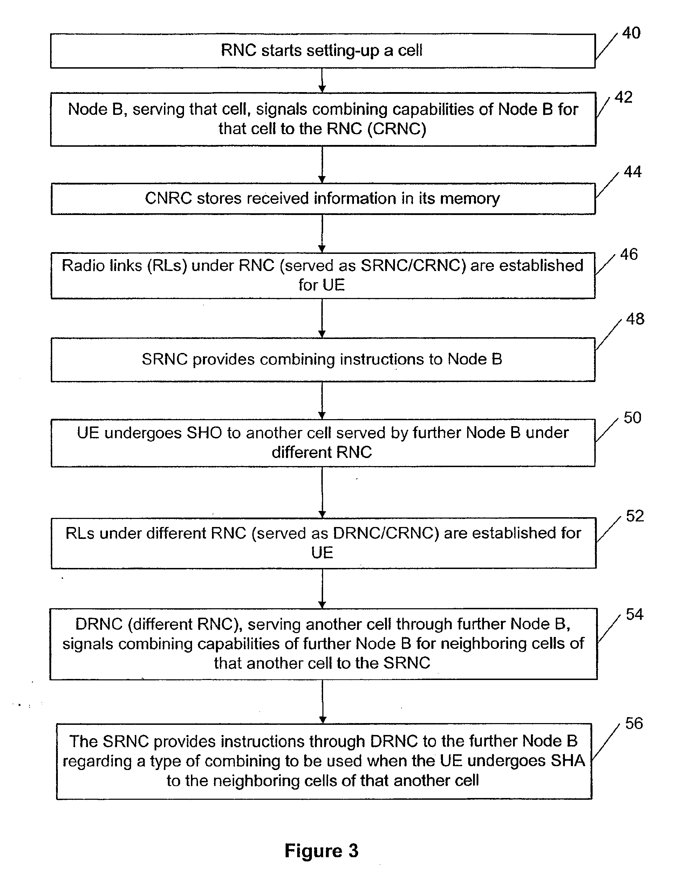

Figure 3 is a flow chart demonstrating signaling combining capability information of a Node B of a wireless communication system to one or more radio network controllers, according to an embodiment of the present invention.

The flow chart of Figure 3 only represents one possible scenario among others. The order of steps shown in Figure 3 is not absolutely required, so generally, the various steps can be performed out of order. In a method according to the first embodiment of the present invention, in a first step **40,** an RNC starts setting-up a cell (along with setting-up other cells for the RNC). In a next step **42,** a Node B, serving that cell, signals its combining capabilities for that cell to the RNC which is the controlling RNC (CRNC) for the Node B. In a next step **44,** the CNRC stores received information in its memory. Then in a next step **46,** radio links (RLs) under the RNC/CRNC served as the SRNC/CRNC are established for a user equipment (UE). In response, in a next step 48, the SRNC provides combining instructions to the Node B.

In a next step **50,** the UE undergoes a soft handover (SHO) to another cell served by a further Node B under different RNC to which the further Node B, serving said another cell signaled combining capability of the further Node B for said another cell, when the another cell was setup.

In a next step **52,** RLs under different RNC (served as DRNC/CRNC) are established for the UE. In a next step **54,** the RNC/DRNC, serving said another cell through the further Node B, signals combining capabilities of the further Node B for the neighboring cells of that another cell to the SRNC (the RNC that serving the cell through the Node B). Finally, in a step **56,** the SRNC uses the information for providing instructions through the DRNC to the further Node B regarding a type of combining to be used for, e.g., combining the data received on an uplink enhanced dedicated channel (E-DCH) when the UE undergoes a soft handover to the neighboring cells of said another cell.

Tables 1 and 2 demonstrate examples for implementing embodiments of the present invention. Table 1 presents a standardization example, according to one embodiment of the present invention, introduced in 3GPP TS25 TS25.433 v. 6.9.0, Chapter 9.2.2.13X by introducing one IEs shown in "IE Type and Reference" column for defining the E-DCH HARQ Combining capability for a Local Cell in NBAP message which corresponds to step one for signaling combining capability information, described herein.

**TABLE 1**

| **IE/Group Name** | **Presence** | **Range** | **IE Type and Reference** | **Semantics Description** |
|---|---|---|---|---|
| E-DCH HARQ Combining Capability | | | ENUMERATED (IR Combining Capable, Chase Combining Capable, IR and Chase Combining Capable) | |

Table 2 presents another standardization example, according to another embodiment of the present invention, introduced in 3GPP TS25 TS25.423 v. 6.9.0, Chapter 9.2.2.D by introducing two information elements (IE) using the Cell Capability Container FDD for indicating which functionalities a cell supports in RNSAP message which corresponds to step two for signaling combining capability information, as described herein. The highlighted text in Table 2 with a larger sized font for 13^{th} and 14^{th} bits in Semantics Description column correspond to these two IEs. The first new IE (13^{th} bit) indicates whether the IR combining is supported or not, and the second IE indicates whether the Chase combining is supported or not. Both of the two IE are introduced into Cell Capability Container FDD IE in RNSAP.

**TABLE 2**

| **IE/Group Name** | **Presence** | **Range** | **IE Type and Reference** | **Semantics Description** |
|---|---|---|---|---|
| Cell Capability Container FDD | | | BIT STRING (32) | Each bit indicates whether a cell supports a particular functionality or not. The value 1 of a bit indicates that the corresponding functionality is supported in a cell and value 0 indicates that the corresponding functionality is not supported in a cell. Each bit is defined as follows. |
| | | | | The first bit:Reserved. |
| | | | | The second bit: Delayed Activation Support Indicator. |
| | | | | The third bit: HS-DSCH Support Indicator. |
| | | | | The fourth bit:Reserved. |
| | | | | The fifth bit: F-DPCH Support Indicator. |
| | | | | The sixth bit: E-DCH Support Indicator. |
| | | | | The seventh bit: E-DCH. TTI2ms Support Indicator. |
| | | | | The eighth bit: E-DCH 2sf2and2sf4 and all inferior SFs Support indicator. |
| | | | | The ninth bit: E-DCH 2sf2 and all inferior SFs Support Indicator. |
| | | | | The tenth bit: E-DCH 2sf4 and all inferior SFs Support Indicator. |
| | | | | The eleventh bit: E-DCH sf4 and all inferior SFs Support Indicator. |
| | | | | The twelveth bit: E-DCH sf8 and all inferior SFs Support Indicator. |
| | | | | **The thirteenth bit: E-DCH HARQ IR Combining Support Indicator.** |
| | | | | **The fourteenth bit: E-DCH HARQ Chase Combining Support Indicator.** |
| | | | | Note that undefined bits are considered as a spare bit and spare bits shall be set to 0 by the transmitter and shall be ignored by the receiver. Note that Reserved bits are not considered as a spare bit. They shall however be set to 0 by the transmitter and shall be ignored by the receiver. |

As explained above, the invention provides both a method and corresponding equipment consisting of various modules providing the functionality for performing the steps of the method. The modules may be implemented as hardware, or may be implemented as software or firmware for execution by a computer processor. In particular, in the case of firmware or software, the invention can be provided as a computer program product including a computer readable storage structure embodying computer program code (i.e., the software or firmware) thereon for execution by the computer processor.

Also, it is noted that various embodiments of the present invention recited herein can be used separately, combined or selectively combined for specific applications.

## Claims

1. A method, comprising:
signaling combining capability information of a Node B for a cell of a wireless communication system to at least one radio network controller, wherein
said combining capability information comprises one information element indicating whether the Node B is configured to support for said cell: incremental redundancy combining, Chase combining or both said incremental redundancy and Chase combinings, or
wherein said combining capability information comprises two information elements, wherein one of said two information elements indicates whether the Node B is configured to support or not to support incremental redundancy combining for said cell and another of said two information elements indicates whether the Node B is configured to support or not to support Chase combining for said cell, or
wherein said combining capability information comprises one or more information elements, or
wherein said combining capability information is for combining data received on an uplink enhanced dedicated channel.

2. The method of claim 1, wherein said signaling comprises providing by the Node B said combining capability information of the Node B for the cell to a radio network controller supporting said Node B of said at least one radio network controller.

3. The method of claim 2, wherein said combining capability information is provided by said Node B to the radio network controller supporting said Node B during a cell set-up for providing a communication with a user equipment, or
wherein said providing is facilitated using a Node B Application Part message signal, or
further comprising storing said combining capability information by said network controller supporting said Node B.

4. The method of claim 2, wherein said signaling further comprises:
further providing said combining capability information of the Node B for the cell by the radio network controller supporting said Node B to a further radio network controller supporting a further node B of said at least one radio network controller, wherein said further radio network controller is a serving radio network controller.

5. The method of claim 4, wherein said radio network controller supporting said Node B is configured as a drift radio network controller to support said serving radio network controller for providing a communication with a user equipment during a soft handover of said user equipment from a cell supported by said further Node B to another cell supported by said Node B, and wherein said further providing is performed after said providing in response to said soft handover of said user equipment.

6. The method of claim 1, wherein said signaling comprises:
providing said combining capability information of the Node B for the cell by a radio network controller supporting said Node B to a further radio network controller supporting a further node B of said at least one radio network controller, wherein said further radio network controller is a serving radio network controller.

7. The method of claim 6, wherein said providing is facilitated using a Radio Network Subsystem Application Part message signal.

8. A computer program product comprising: a computer readable storage structure embodying computer program code thereon for execution by a computer processor with said computer program code, wherein said computer program code comprises instructions for performing the method of claim 1.

9. A network element, comprising:
a scheduling module, configured to provide combining capability information of a Node B for a cell of a communication system to at least one radio network controller;
wherein said combining capability information comprises one information element indicating whether the Node B is configured to support for said cell: incremental redundancy combining, Chase combining or both said incremental redundancy and Chase combinings, or
wherein said combining capability information comprises two information elements, wherein one of said two information elements indicates whether the Node B is configured to support or not to support incremental redundancy combining for said cell and another of said two information elements indicates whether the Node B is configured to support or not to support Chase combining for said cell, or
wherein said combining capability information comprises one or more information elements, or
wherein said combining capability information is for combining data received on an uplink enhanced dedicated channel.

10. The network element of claim 9, further comprising:
a memory, configured to store said combining capability information, or
further comprising a transmitting module, configured to transmit said combining capability information provided by said scheduling module to said at least one radio network controller.

11. The network element of claim 9, wherein said network element is the Node B and said combining capability information of the Node B for the cell is provided to a radio network controller supporting said Node B of said at least one radio network controller.

12. The network element of claim 11, wherein said combining capability information is provided to the radio network controller supporting said Node B during a cell set-up for providing a communication with a user equipment, or
wherein said providing is facilitated using a Node B Application Part message signal.

13. The network element of claim 9, wherein said network element is a radio network controller configured to support said Node B, and to provide said combining capability information of the Node B for the cell to a further radio network controller supporting a further Node B of said at least one radio network controller, wherein said further radio network controller is a serving radio network controller.

14. The network element of claim 13, wherein said combining capability information of the Node B for the cell was previously provided to said radio network controller by said Node B, or
wherein said radio network controller is configured to provide said combining capability information of the Node B for the cell using a Radio Network Subsystem Application Part message signal, or
wherein said radio network controller supporting said Node B is configured as a drift radio network controller to support said serving radio network controller for providing a communication with a user equipment during a soft handover of said user equipment from a cell supported by said further Node B to another cell supported by said Node B.

15. The network element of claim 9, wherein an integrated circuit comprises all or selected blocks or modules of said network element.

16. A wireless communication system, comprising:
a Node B; and
at least one network element,
wherein combining capability information of the Node B for a cell is provided to said at least one network element;
wherein said combining capability information comprises one information element indicating whether the Node B is configured to support for said cell: incremental redundancy combining, Chase combining or both said incremental redundancy and Chase combinings, or
wherein said combining capability information comprises two information elements, wherein one of said two information elements indicates whether the Node B is configured to support or not to support incremental redundancy combining for said cell and another of said two information elements indicates whether the Node B is configured to support or not to support Chase combining for said cell, or
wherein said combining capability information comprises one or more information elements, or
wherein said combining capability information is for combining data received on an uplink enhanced dedicated channel.

## Patentansprüche

1. Verfahren, das Folgendes umfasst:
Signalisieren von Kombinationsfähigkeitsinformationen eines Knotens B für eine Zelle eines drahtlosen Kommunikationssystems zu wenigstens einer Funknetzsteuereinheit, wobei
die Kombinationsfähigkeitsinformationen ein Informationselement umfassen, das angibt, ob der Knoten B konfiguriert ist, für diese Zelle Folgendes zu unterstützen: inkrementelles Redundanzkombinieren, Chase-Kombinieren oder sowohl inkrementelles Redundanzkombinieren als auch Chase-Kombinieren, oder
wobei die Kombinationsfähigkeitsinformationen zwei Informationselemente umfassen, wobei eines der zwei Informationselemente angibt, ob der Knoten B konfiguriert ist, inkrementelles Redundanzkombinieren für die Zelle zu unterstützen oder nicht zu unterstützen, und ein weiteres der zwei Informationselemente angibt, ob der Knoten B konfiguriert ist, Chase-Kombinieren für die Zelle zu unterstützen oder nicht zu unterstützen, oder
wobei die Kombinationsfähigkeitsinformationen ein oder mehrere Informationselemente umfassen, oder
wobei die Kombinationsfähigkeitsinformationen dazu dienen, Daten, die auf einem verbesserten dedizierten Aufwärtsstreckenkanal empfangen werden, zu kombinieren.

2. Verfahren nach Anspruch 1, wobei das Signalisieren Bereitstellen durch den Knoten B der Kombinationsfähigkeitsinformationen des Knotens B für die Zelle für eine den Knoten B unterstützende Funknetzsteuereinheit aus den wenigstens einen Funknetzsteuereinheiten umfasst.

3. Verfahren nach Anspruch 2, wobei die Kombinationsfähigkeitsinformationen durch den Knoten B für die Funknetzsteuereinheit, die den Knoten B während einer Zelleneinrichtung zum Bereitstellen einer Kommunikation mit einem Anwendergerät unterstützt, bereitgestellt werden, oder
wobei das Bereitstellen durch Verwendung eines Knoten-B-Anwenderteilnachrichtensignals erleichtert wird, oder
das ferner das Speichern der Kombinationsfähigkeitsinformationen durch die Netzsteuereinheit, die den Knoten B unterstützt, umfasst.

4. Verfahren nach Anspruch 2, wobei das Signalisieren ferner Folgendes umfasst:
ferner Bereitstellen der Kombinationsfähigkeitsinformationen des Knotens B für die Zelle durch die den Knoten B unterstützende Funknetzsteuereinheit für eine weitere, einen weiteren Knoten B unterstützende Funknetzsteuereinheit aus den wenigstens einen Funknetzsteuereinheiten, wobei die weitere Funknetzsteuereinheit eine versorgende Funknetzsteuereinheit ist.

5. Verfahren nach Anspruch 4, wobei die den Knoten B unterstützende Funknetzsteuereinheit als eine Drift-Funknetzsteuereinheit konfiguriert ist, um die versorgende Funknetzsteuereinheit bei dem Bereitstellen einer Kommunikation mit einem Anwendergerät während einer weichen Übergabe des Anwendergeräts von einer durch den weiteren Knoten B unterstützten Zelle zu einer anderen von dem Knoten B unterstützten Zelle zu unterstützen, und wobei das fernere Bereitstellen nach dem Bereitstellen in Reaktion auf die weiche Übergabe des Anwendergeräts ausgeführt wird.

6. Verfahren nach Anspruch 1, wobei das Signalisieren Folgendes umfasst:
Bereitstellen der Kombinationsfähigkeitsinformationen des Knotens B für die Zelle durch eine den Knoten B unterstützende Funknetzsteuereinheit für eine weitere, einen weiteren Knoten B unterstützende Funknetzsteuereinheit aus den wenigstens einen Funknetzsteuereinheiten, wobei die weitere Funknetzsteuereinheit eine versorgende Funknetzsteuereinheit ist.

7. Verfahren nach Anspruch 6, wobei das Bereitstellen durch Verwenden eines Funknetz-Subsystemanwenderteilnachrichtensignals erleichtert wird.

8. Computerprogrammprodukt, das Folgendes umfasst:
eine computerlesbare Speicherstruktur, die darauf Computerprogrammcode enthält zum Ausführen durch einen Computerprozessor mit dem Computerprogrammcode, wobei der Computerprogrammcode Anweisungen zum Ausführen des Verfahrens nach Anspruch 1 umfasst.

9. Netzelement, das Folgendes umfasst:
ein Planungsmodul, das konfiguriert ist, Kombinationsfähigkeitsinformationen eines Knotens B für eine Zelle eines Kommunikationssystems für wenigstens eine Funknetzsteuereinheit bereitzustellen;
wobei die Kombinationsfähigkeitsinformationen ein Informationselement umfassen, das angibt, ob der Knoten B konfiguriert ist, für diese Zelle Folgendes zu unterstützen: inkrementelles Redundanzkombinieren, Chase-Kombinieren oder sowohl inkrementelles Redundanzkombinieren als auch Chase-Kombinieren, oder
wobei die Kombinationsfähigkeitsinformationen zwei Informationselemente umfassen, wobei eines der zwei Informationselemente angibt, ob der Knoten B konfiguriert ist, inkrementelles Redundanzkombinieren für die Zelle zu unterstützen oder nicht zu unterstützen, und ein weiteres der zwei Informationselemente angibt, ob der Knoten B konfiguriert ist, Chase-Kombinieren für die Zelle zu unterstützen oder nicht zu unterstützen, oder
wobei die Kombinationsfähigkeitsinformationen ein oder mehrere Informationselemente umfassen, oder
wobei die Kombinationsfähigkeitsinformationen dazu dienen, Daten, die auf einem verbesserten dedizierten Aufwärtsstreckenkanal empfangen werden, zu kombinieren.

10. Netzelement nach Anspruch 9, und das ferner Folgendes umfasst:
einen Speicher, der konfiguriert ist, die Kombinationsfähigkeitsinformationen zu speichern, oder
das ferner ein Übertragungsmodul umfasst, das konfiguriert ist, die Kombinationsfähigkeitsinformationen, die von dem Planungsmodul bereitgestellt sind, zu der wenigstens einen Funknetzsteuereinheit zu übertragen.

11. Netzelement nach Anspruch 9, wobei das Netzelement der Knoten B ist und die Kombinationsfähigkeitsinformationen des Knotens B für die Zelle für eine den Knoten B unterstützende Funknetzsteuereinheit aus der wenigstens einen Funknetzsteuereinheit bereitgestellt werden.

12. Netzelement nach Anspruch 11, wobei die Kombinationsfähigkeitsinformationen für die den Knoten B unterstützende Funknetzsteuereinheit während einer Zelleneinrichtung zum Bereitstellen einer Kommunikation mit einem Anwendergerät bereitgestellt werden, oder
wobei das Bereitstellen durch Verwendung eines Knoten-B-Anwenderteilnachrichtensignals erleichtert wird.

13. Netzelement nach Anspruch 9, wobei das Netzelement eine Funknetzsteuereinheit ist, die konfiguriert ist, den Knoten B zu unterstützen und die Kombinationsfähigkeitsinformationen des Knotens B für die Zelle für eine weitere, einen weiteren Knoten B unterstützende Funknetzsteuereinheit aus den wenigstens einen Funknetzsteuereinheiten bereitzustellen, wobei die weitere Funknetzsteuereinheit eine versorgende Funknetzsteuereinheit ist.

14. Netzelement nach Anspruch 13, wobei die Kombinationsfähigkeitsinformationen des Knotens B für die Zelle vorher für die Funknetzsteuereinheit durch den Knoten B bereitgestellt worden ist, oder
wobei die Funknetzsteuereinheit konfiguriert ist, die Kombinationsfähigkeitsinformationen des Knotens B für die Zelle unter Verwendung eines Funknetz-Subsystemanwenderteilnachrichtensignals bereitzustellen, oder
wobei die den Knoten B unterstützende Funknetzsteuereinheit als eine Drift-Funknetzsteuereinheit konfiguriert ist, um die versorgende Funknetzsteuereinheit zum Bereitstellen einer Kommunikation mit einem Anwendergerät während einer weichen Übergabe des Anwendergeräts von einer von dem weiteren Knoten B unterstützten Zelle zu einer anderen von dem Knoten B unterstützten Zelle zu unterstützen.

15. Netzelement nach Anspruch 9, wobei ein integrierter Schaltkreis alle oder ausgewählte Blöcke oder Module des Netzelements umfasst.

16. Drahtloses Kommunikationssystem, das Folgendes umfasst:
einen Knoten B; und
wenigstens ein Netzelement,
wobei Kombinationsfähigkeitsinformationen des Knotens B für eine Zelle für das wenigstens ein Netzelement bereitgestellt werden;
wobei die Kombinationsfähigkeitsinformationen ein Informationselement umfassen, das angibt, ob der Knoten B konfiguriert ist, für diese Zelle Folgendes zu unterstützen: inkrementelles Redundanzkombinieren, Chase-Kombinieren oder sowohl inkrementelles Redundanzkombinieren als auch Chase-Kombinieren, oder
wobei die Kombinationsfähigkeitsinformationen zwei Informationselemente umfassen, wobei eines der zwei Informationselemente angibt, ob der Knoten B konfiguriert ist, inkrementelles Redundanzkombinieren für die Zelle zu unterstützen oder nicht zu unterstützen, und ein weiteres der zwei Informationselemente angibt, ob der Knoten B konfiguriert ist, Chase-Kombinieren für die Zelle zu unterstützen oder nicht zu unterstützen, oder
wobei die Kombinationsfähigkeitsinformationen ein oder mehrere Informationselemente umfassen, oder
wobei die Kombinationsfähigkeitsinformationen dazu dienen, Daten, die auf einem verbesserten dedizierten Aufwärtsstreckenkanal empfangen werden, zu kombinieren.

## Revendications

1. Procédé comprenant les étapes suivantes :
signaler des informations de capacité de combinaison d'un noeud B pour une cellule d'un système de communication sans fil à au moins un contrôleur de réseau radio, où
lesdites informations de capacité de combinaison comprennent un élément d'informations indiquant si le noeud B est configuré pour supporter, pour ladite cellule : une combinaison de redondance incrémentale, une combinaison de Chase ou à la fois des combinaisons de redondance incrémentale et de Chase, ou
où lesdites informations de capacité de combinaison comprennent deux éléments d'informations, où un desdits deux éléments d'informations indique si le noeud B est configuré pour supporter, ou pour ne pas supporter, une combinaison de redondance incrémentale pour ladite cellule et un autre desdits deux éléments d'informations indique si le noeud B est configuré pour supporter, ou pour ne pas supporter, une combinaison de Chase pour ladite cellule, ou
où lesdites informations de capacité de combinaison comprennent un ou plusieurs éléments d'informations, ou
où lesdites informations de capacité de combinaison sont destinées à combiner des données reçues sur un canal dédié amélioré en liaison montante.

2. Procédé selon la revendication 1, dans lequel ladite signalisation comprend de délivrer, par le noeud B, lesdites informations de capacité de combinaison du noeud B pour la cellule à un contrôleur de réseau radio supportant ledit noeud B dudit au moins un contrôleur de réseau radio.

3. Procédé selon la revendication 2, dans lequel lesdites informations de capacité de combinaison sont délivrées par ledit noeud B au contrôleur de réseau radio supportant ledit noeud B au cours d'un établissement de cellule pour fournir une communication avec un équipement utilisateur, ou
dans lequel la délivrance est facilitée au moyen d'un signal de message NBAP (noeud B Application Part), ou
comprenant en outre de stocker lesdites informations de capacité de combinaison par ledit contrôleur de réseau supportant ledit noeud B.

4. Procédé selon la revendication 2, dans lequel ladite signalisation comprend en outre :
de délivrer en outre lesdites informations de capacité de combinaison du noeud B pour la cellule par le contrôleur de réseau radio supportant ledit noeud B à un autre contrôleur de réseau radio supportant un autre noeud B dudit au moins un contrôleur de réseau radio, où ledit autre contrôleur de réseau radio est un contrôleur de réseau radio de desserte.

5. Procédé selon la revendication 4, dans lequel ledit contrôleur de réseau radio supportant ledit noeud B est configuré comme un contrôleur de réseau radio de dérive pour supporter ledit contrôleur de réseau radio de desserte pour fournir une communication avec un équipement utilisateur au cours d'un transfert intercellulaire sans coupure dudit équipement utilisateur depuis une cellule supportée par ledit autre noeud B vers une autre cellule supportée par ledit noeud B, et où ladite autre délivrance est exécutée après ladite délivrance en réponse audit transfert intercellulaire sans coupure dudit équipement utilisateur.

6. Procédé selon la revendication 1, dans lequel ladite signalisation comprend l'étape suivante :
délivrer lesdites informations de capacité de combinaison du noeud B pour la cellule par un contrôleur de réseau radio supportant ledit noeud B à un autre contrôleur de réseau radio supportant un autre noeud B dudit au moins un contrôleur de réseau radio, où ledit autre contrôleur de réseau radio est un contrôleur de réseau radio de desserte.

7. Procédé selon la revendication 6, dans lequel la délivrance est facilitée au moyen d'un signal de message RNSAP (Radio Network Subsystem Application Part).

8. Produit programme informatique comprenant : une structure de stockage lisible par ordinateur intégrant un code de programme informatique destiné à une exécution par un processeur informatique avec ledit code de programme informatique, où ledit code de programme informatique comprend des instructions pour exécuter le procédé de la revendication 1.

9. Élément de réseau comprenant :
un module de planification, configuré pour délivrer des informations de capacité de combinaison d'un noeud B pour une cellule d'un système de communication à au moins un contrôleur de réseau radio ;
où lesdites informations de capacité de combinaison comprennent un élément d'informations indiquant si le noeud B est configuré pour supporter, pour ladite cellule : une combinaison de redondance incrémentale, une combinaison de Chase ou à la fois des combinaisons de redondance incrémentale et de Chase, ou
où lesdites informations de capacité de combinaison comprennent deux éléments d'informations, où un desdits deux éléments d'informations indique si le noeud B est configuré pour supporter, ou pour ne pas supporter, une combinaison de redondance incrémentale pour ladite cellule, et un autre desdits deux éléments d'informations indique si le noeud B est configuré pour supporter, ou pour ne pas supporter, une combinaison de Chase pour ladite cellule, ou
où lesdites informations de capacité de combinaison comprennent un ou plusieurs éléments d'informations, ou
où lesdites informations de capacité de combinaison sont destinées à combiner des données reçues sur un canal dédié amélioré en liaison montante.

10. Élément de réseau selon la revendication 9, comprenant en outre :
une mémoire, configurée pour stocker lesdites informations de capacité de combinaison, ou
comprenant en outre un module de transmission, configuré pour transmettre lesdites informations de capacité de combinaison délivrées par ledit module de planification audit au moins un contrôleur de réseau radio.

11. Élément de réseau selon la revendication 9, dans lequel ledit élément de réseau est le noeud B et lesdites informations de capacité de combinaison du noeud B pour la cellule sont délivrées à un contrôleur de réseau radio supportant ledit noeud B dudit au moins un contrôleur de réseau radio.

12. Élément de réseau selon la revendication 11, dans lequel lesdites informations de capacité de combinaison sont délivrées au contrôleur de réseau radio supportant ledit noeud B au cours d'un établissement de cellule pour fournir une communication avec un équipement utilisateur, ou
dans lequel la délivrance est facilitée au moyen d'un signal de message NBAP (noeud B Application Part).

13. Élément de réseau selon la revendication 9, dans lequel ledit élément de réseau est un contrôleur de réseau radio configuré pour supporter ledit noeud B, et pour délivrer lesdites informations de capacité de combinaison du noeud B pour la cellule à un autre contrôleur de réseau radio supportant un autre noeud B dudit au moins un contrôleur de réseau radio, où ledit autre contrôleur de réseau radio est un contrôleur de réseau radio de desserte.

14. Élément de réseau selon la revendication 13, dans lequel lesdites informations de capacité de combinaison du noeud B pour la cellule ont été préalablement délivrées audit contrôleur de réseau radio par ledit noeud B, ou
dans lequel ledit contrôleur de réseau radio est configuré pour délivrer lesdites informations de capacité de combinaison du noeud B pour la cellule au moyen d'un signal de message RNSAP (Radio Network Subsystem Application Part), ou
dans lequel ledit contrôleur de réseau radio supportant ledit noeud B est configuré comme un contrôleur de réseau radio de dérive pour supporter ledit contrôleur de réseau radio de desserte pour fournir une communication avec un équipement utilisateur au cours d'un transfert intercellulaire sans coupure dudit équipement utilisateur depuis une cellule supportée par ledit autre noeud B vers une autre cellule supportée par ledit noeud B.

15. Élément de réseau selon la revendication 9, dans lequel un circuit intégré comprend tous, ou des modules ou des blocs sélectionnés, dudit élément de réseau.

16. Système de communication sans fil comprenant :
un noeud B ; et
au moins un élément de réseau,
dans lequel des informations de capacité de combinaison du noeud B pour une cellule sont délivrées audit au moins un élément de réseau ;
dans lequel lesdites informations de capacité de combinaison comprennent un élément d'information indiquant si le noeud B est configuré pour supporter, pour ladite cellule : une combinaison de redondance incrémentale, une combinaison de Chase ou à la fois des combinaisons de redondance incrémentale et de Chase, ou
où lesdites informations de capacité de combinaison comprennent deux éléments d'informations, où un desdits deux éléments d'informations indique si le noeud B est configuré pour supporter, ou pour ne pas supporter, une combinaison de redondance incrémentale pour ladite cellule et un autre desdits deux éléments d'informations indique si le noeud B est configuré pour supporter, ou pour ne pas supporter, une combinaison de Chase pour ladite cellule, ou
où lesdites informations de capacité de combinaison comprennent un ou plusieurs éléments d'informations, ou
où lesdites informations de capacité de combinaison sont destinées à combiner des données reçues sur un canal dédié amélioré en liaison montante.
